# EUROPEAN PATENT SPECIFICATION

(11) **EP 0 577 251 B1**
(45) Date of publication and mention of the grant of the patent: **15.03.1995**
(21) Application number: 93303479.5
(22) Date of filing: 05.05.1993
(51) Int. Cl.: F25D 17/04, B01D 53/02, B01D 53/86

(54) **Deodorizer for refrigerator or the like**
Desodorisierungsvorrichtung für Kühlschrank oder dergleichen
Dispositif de désodorisation pour réfrigérateur ou similaire

(30) Priority: 18.06.1992 JP 159229/92
(43) Date of publication of application: 05.01.1994
(73) Proprietor: KABUSHIKI KAISHA TOSHIBA, Kawasaki-shi, Kanagawa-ken 210 (JP)
(72) Inventor: Sowa, Teruaki, c/o Osaka Works, K.K. Toshiba, Ibaraki-shi, Osaka-fu (JP); Nanri, Satoshi, c/o Osaka Works, K.K. Toshiba, Ibaraki-shi, Osaka-fu (JP)
(74) Representative: Luckhurst, Anthony Henry William

(56) References cited:
- GB-A- 2 216 006
- PATENT ABSTRACTS OF JAPAN vol. 014, no. 475 (C-0770) 17 October 1990 & JP-A-02 194 816 (TOSHIBA)

## Description

This invention relates to a deodorizer for refrigerators or the like wherein odor components are removed from an atmosphere in storage compartments in which food is contained.

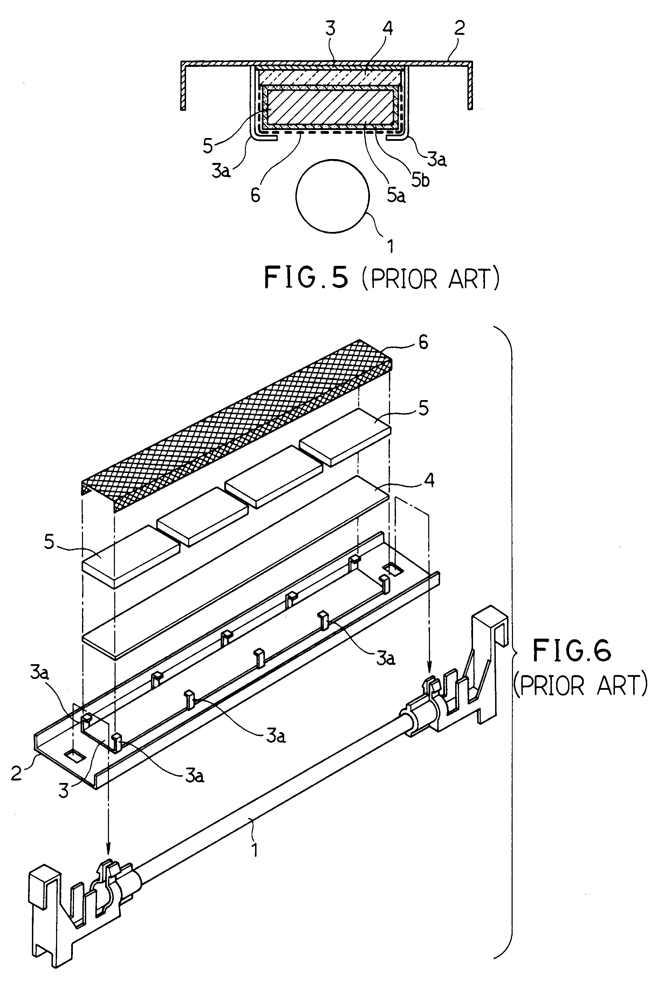

Refrigerators have recently been equipped with a deodorizer comprising a deodorizing element composed of an adsorbent and an oxidation catalyzer in combination and a heater heating the deodorizing element. The deodorizer is disposed in a cooling device compartment composing a part of a circulation path through which air in storage compartments is circulated (see, for example, JP-A-02 194 816). FIGS. 5 and 6 illustrate the disposition of a conventional deodorizer. FIG. 5 shows the deodorizer in an assembled state and FIG. 6 shows the state of the deodorizer before assembly. A cover 2 is attached to a defrosting heater 1 disposed below a cooling device or an evaporator so as to cover it from above. A metal holder 3 having a plurality of pairs of claws 3a is secured to an upper surface of the cover 2 by way of spot welding in the state as shown in FIG. 6. A heat insulating strip 4 and a plurality of rectangular deodorising elements 5 are disposed in turn on the holder 3. Thereafter, a wire net 6 is put onto the deodorizing elements 5 and then, the claws 3a are bent inwardly such that the deodorizing elements 5 are held in position by the wire net 6. In the state that the deodorising elements 5 are held by the cover 2, it is attached to the heater 1 from above so as to cover the same such that the wire net 6 faces the heater 1, as shown in FIG. 5. Subsequently, the cover 2 attached to the heater 1 is incorporated into the cooling device compartment of the refrigerator.

The above-described deodorizing element 5 comprises an adsorbent layer 5a composed of an adsorbent such as silica and a catalyzer layer 5b formed on the surface of the adsorbent layer 5a from platinum. Odor components contained in the air in the refrigerator is adsorbed by the adsorbent layer 5a, which is then heated by the heater 1 during a defrosting operation for the evaporator such that the adsorbed odor components are removed from the adsorbent layer 5a. The odor components removed from the adsorbent layer 5a is oxidized by the catalyzer layer 5b.

The above-mentioned heat insulating strip 4 prevents the temperatures of the deodorizing elements 5 from being rapidly lowered and the element 5 from being broken when defrost water from the evaporator drops down onto the cover 2. The wire net 6 serves to apply heat from the heater 1 uniformly to the whole surface of each deodorizing element 5 as well as to hold each deodorizing element 5 in position.

In the above-described conventional deodorizer, however, the holder 3 is separately necessary for attaching the cover 2 to the deodorizing elements 5. Furthermore, the heat insulating strip 4 is required for prevention of the drop of the deodorizing element temperature. Consequently, the above-described deodorizer has problems that a large number of parts are required and that its construction becomes complicate, resulting in increase in its production cost.

Therefore, an object of the present invention is to provide a deodorizer for a refrigerator or the like wherein the number of parts can be reduced with the construction simplified accordingly and its production cost can be reduced.

The present invention provides a deodorizer for a refrigerator or the like including at least one storage compartment for accommodating food, the deodorizer comprising a heater provided in an air circulation path through which air in the storage compartment is circulated, a cover covering the heater from above, a deodorizing element attached to an underside of the cover via holding means so as to be positioned between the heater and the cover, the holding means is secured to the cover, the deodorizing element being brought into contact with the air passing through the air circulation path to thereby adsorb odor components contained in the air passing through the circulation path and oxidizing the adsorbed odor components for decomposition thereof when heated by the heater, characterized in that the cover has a plurality of convex portions on an underside thereof and that the deodorizing element is held from below by the holding means so as to be engaged with the convex portions.

In accordance with the above-described deodorizer, the holding means is directly secured to the cover in the state that the deodorizing elements are held by the holding means, so that the deodorizing elements are attached to the underside of the cover. Thus, the conventional holder with a plurality of claws is not necessary.

Spaces are defined by the convex portions between the underside of the cover and the upper faces of the deodorizing elements in the state that the deodorizing elements are attached to the cover. Air in each space serves as the conventional heat insulator and accordingly, the heat insulator employed conventionally is not necessary.

The holding means may comprise a metal wire net having a high thermal conductivity and may have a plurality of concave portions in which the deodorizing elements are contained respectively. In this state, the holding means may be secured to the cover by welding.

The invention will be described, merely by way of example, with reference to the accompanying drawings, in which;
FIG. 1 is a longitudinally sectional front view of the deodorizer of an embodiment in accordance with the present invention;
FIG. 2 is an enlarged longitudinally sectional side view of the deodorizer;
FIG. 3 is an exploded perspective view of the deodorizer;
FIG. 4 is a longitudinally sectional side view of a refrigerator in which the deodorizer is incorporated;
FIG. 5 is a view similar to FIG. 2 showing a prior art; and
FIG. 6 is a view similar to FIG. 3 showing the prior art.

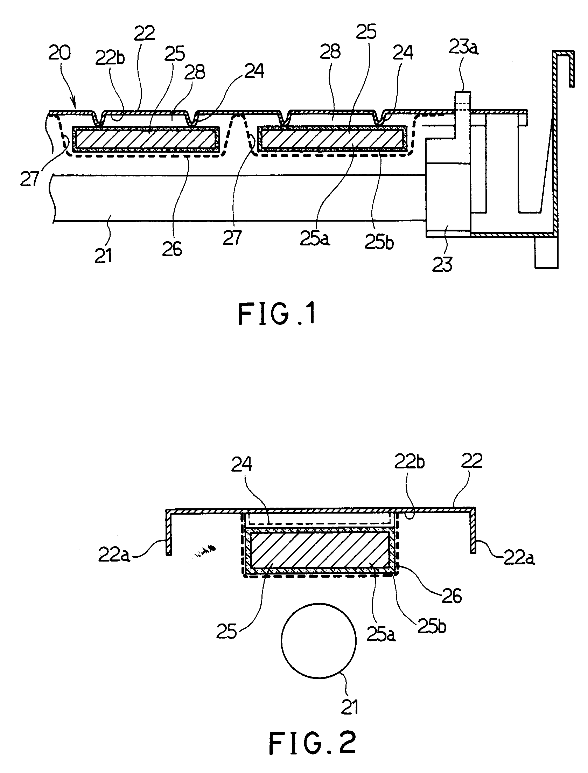

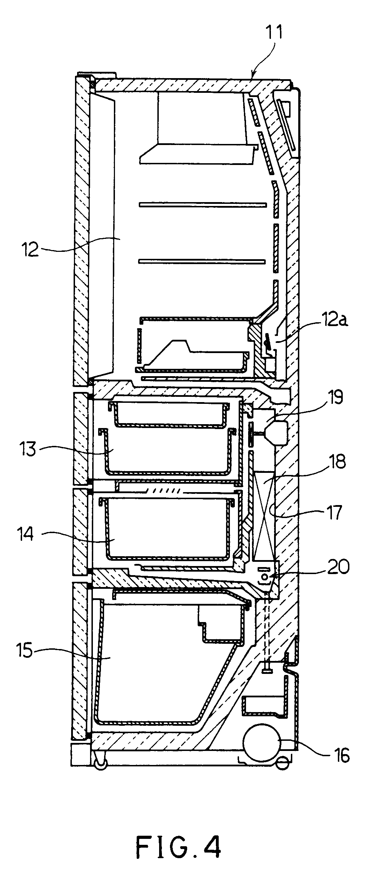

An embodiment of the invention will be described with reference to FIGS. 1-4. Referring first to FIG. 4 showing the longitudinally sectional structure of the refrigerator, the interior of a refrigerator cabinet 11 is divided into a storage compartment 12, upper and lower freezing compartments 13 and 14, a vegetable compartment 15, an ice making compartment (not shown) and the like, each compartment constituting a storage for storing food. A compressor 16 is mounted in a machine compartment at the rear of the vegetable compartment 15. A cooling device compartment 17 is formed at the rear of the freezing compartments 13, 14 and constitutes a part of a circulation path through which air in the storage is circulated. A cooling device 18 such as an evaporator, a blowing fan 19, a deodorizer 20 which will be described later, and the like are disposed in the cooling device compartment 17. The deodorizer 20 is positioned below the evaporator 18.

Upon operation of the compressor 16 and the blowing fan 19, air cooled by the evaporator 18 in the cooling device compartment 17 is supplied directly to the freezing compartments 13, 14 and thereafter, the cooled air is returned into the cooling device compartment 17. Furthermore, the cooled air is supplied into the vegetable compartment 15 through a damper 12a and the storage compartment 12 and thereafter, the air is returned into the cooling device compartment 17 such that the cooled air is circulated through all the storage compartments for cooling the atmosphere in each compartment.

The deodorizer 20 will now be described with reference to FIGS. 1-3. A heater 21 is provided for defrosting the evaporator 18. The heater 21 is adapted to also serve to heat the deodorizing elements 5, as will be described later. The heater 21 comprises a glass tube heater, for example and is disposed below the evaporator 18 to extend transversely as viewed from the front of the refrigerator. The heater 21 is controlled so as to be energized to defrost the evaporator 18 and to be deenergized otherwise.

A cover 22 formed of a metal such as aluminum covers the heater 21 from above. The cover 22 has two holes 22c formed in both ends thereof respectively and claws 23a of a support member 23 are engaged with the holes 22c respectively. The cover 22 further has front and rear downwardly bent edges 22a and a plurality of convex portions 24 in its underside 22b. A plurality of deodorizing elements 25 are attached to a holder 26 comprising a metal wire net formed of a material with a high thermal conductivity at the side of the underside 22b. Three such deodorizing elements 25 are employed in the embodiment.

Each deodorizing element 25 is porous and formed into a generally rectangular shape. Each deodorizing element 25 has a two-layer structure of an adsorbent layer 25a formed by solidifying an adsorbent such as silica and a catalyzer layer 25b formed by depositing an oxidation catalyzer such as platinum on the surface of the adsorbent layer 25a.

The holder 26 has three concave portions 27 formed to correspond to the number of the deodorizing elements 25. The deodorizing elements 25 are enclosed in the concave portions 27 respectively. In this condition, a plurality of portions of the holder 26 in touch with the cover 22 are secured to the cover 22 by spot welding such that the holder 26 is secured to the cover 22. When the holder 26 is secured to the underside 22b of the cover 22, the upper faces of the deodorizing elements 25 abut against the convex portions 24 respectively. The deodorizing elements 25 are positioned by the respective concave portions 27 such that displacement thereof are prevented. Spaces 28 are defined by the convex portions 24 between the deodorizing elements 25 and the underside of the cover 22.

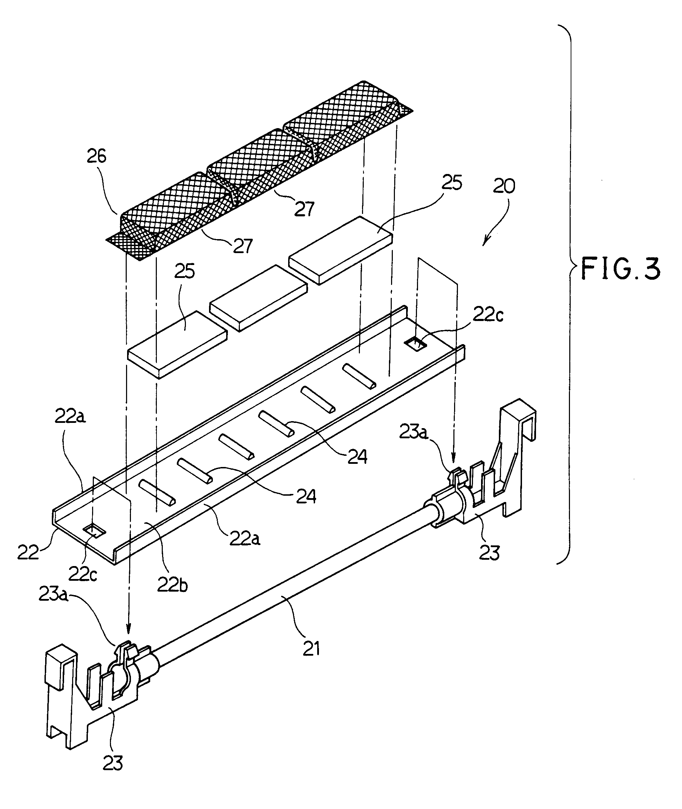

The procedure of assembling the above-described deodorizer 20 will now be described. The deodorizing elements 25 are placed on the upwardly directed underside 22b of the cover 22 before the cover 22 is attached to the heater 21, as shown in FIG. 3. Subsequently, the holder 26 is attached to the cover 22 so that the deodorizing elements 25 are enclosed in the respective concave portions 27, and then, the holder 26 is spot-welded at a plurality of its portions to the cover 22. Thus, the deodorizing elements 25 are attached to the cover 22. Then, the opposed ends of the cover 22 to which the deodorizing elements 25 is attached is mounted on the respective claws 23a of the support member 23 of the heater 21 with the support member 23 positioned at the side of the heater 21, as is shown in FIGS. 1 and 2. Subsequently, the deodorizer 20 is incorporated into the cooling device compartment 17 of the refrigerator together with the heater 21 with the cover 22 at the upper side.

The operation of the deodorizer 20 will be described. The air in the refrigerator is circulated via the cooling device compartment 17 during a cooling operation in which the compressor 16 and the blowing fan 19 are operated. The air, when passing through the cooling device compartment 17, is brought into contact with the deodorizing elements 25 of the deodorizer 20 such that odor components contained in the air is adsorbed into the adsorbent layers 25a to be removed from the air.

On the other hand, when a cumulative operation time period of the compressor 16 has reached a predetermined value, the compressor 16 and the blowing fan 19 are deenergized and the heater 21 is energized so that the defrosting operation is initiated for the evaporator 18. The evaporator 18 is heated for the defrosting as the result of heat generation of the heater 21. Then, the deodorizing elements 25 are also heated by the heat generated by the heater 21.

The deodorizing elements 25 are directly heated by radiant heat from the heater 21 and indirectly heated by thermal conduction of the holder 26 such that the whole of each deodorizing element 25 is heated as uniformly as possible. When the temperature of each deodorizing element 25 exceeds a predetermined value as the result of heating, odor components adsorbed by the adsorbent layer 25a are removed and oxidized by the catalyzer layer 25b to be decomposed. The deodorizing capability of each deodorizing element 25 can be recovered when it is heated such that the odor components are removed from it.

The deodorizing elements 25 and the heater 21 can be prevented from being exposed to the defrost water resulting from the defrosting of the evaporator 18 since they are covered by the cover 22 from above. Furthermore, the temperature of the cover 22 is lowered by the defrost water. However, since the spaces 28 are defined between the underside of the cover 22 and the upper faces of the deodorizing elements 25, the temperatures of the deodorizing elements 25 can be prevented by air in the spaces 28 as much as possible. Accordingly, the air in each space 28 serves as a conventional heat insulator. Furthermore, the deodorizing elements 25 are also covered by the holder 26. Should each deodorizing element 25 be broken, it can be prevented from falling or scattering by the holder 26.

The heater 21 is deenergized for completion of the defrosting operation when the evaporator 18 has reached a predetermined defrosting completion temperature. Subsequently, the compressor 16 and the blowing fan 19 are operated for restart of the cooling operation. The temperature of each deodorizing element 25 is lowered with the restart of the cooling operation. The odor components care adsorbed by the deodorizing elements 25 in the same manner as described above.

According to the above-described embodiment, the metal wire net or the holder 26 is directly secured to the cover 22 in the condition that the deodorizing elements 25 are held by the holder 26, so that the deodorizing elements 25 are attached to the underside of the cover 22. Consequently, the conventional holder with a plurality of pairs of claws is not necessary. Furthermore, the spaces 28 are defined by the convex portions 24 formed in the underside 22b of the cover 22 between the underside 22b of the cover 22 and the upper faces of the deodorizing elements 25 in the state that the deodorizing elements 25 are attached to the cover 22. The air in each of these spaces 28 serves as the conventional heat insulator and accordingly, the heat insulator employed in the conventional deodorizer is not necessitated. Consequently, the number of parts can be reduced since the holder and the heat insulator both employed in the conventional deodorizer are not necessary in the above-described deodorizer. Thus, the construction of the deodorizer can be simplified and its production cost can be reduced.

Although the heater 21 provided for defrosting the evaporator 18 is used also for heating the deodorizing elements 25 in the foregoing embodiment, an exclusive heater may be provided for heating the deodorizing elements 25.

## Claims

1. A deodorizer for a refrigerator or the like including at least one storage compartment (12) for accommodating food, the deodorizer comprising a heater (21) provided in an air circulation path through which air in the storage compartment (12) is circulated, a cover (22) covering the heater (21) from above, a deodorizing element (25) attached to an underside of the cover (22) via holding means (26) so as to be positioned between the heater (21) and the cover (22), the holding means (26) being secured to the cover (22), the deodorizing element (25) being brought into contact with the air passing through the air circulation path to thereby adsorb odor components contained in the air passing through the circulation path and oxidizing the adsorbed odor components for decomposition thereof when heated by the heater (21), characterized in that the cover (22) has a plurality of convex portions (24) on an underside thereof and that the deodorizing element (25) is held from below by the holding means (26) so as to be engaged with the convex portions (24).

2. A deodorizer according to claim 1, characterized in that the holding means (26) is formed of a high thermally conductive material.

3. A deodorizer according to claim 1 or 2, characterized in that a plurality of deodorizing elements (25) are provided and that the holding means (26) has a plurality of concave portions (27) in which the deodorizing elements (25) are contained respectively.

4. A deodorizer according to claim 1, 2 or 3, characterized in that the holding means (26) comprises a metal wire net and is welded to the cover (22).

## Patentansprüche

1. Desodorierungsvorrichtung für einen Kühlschrank oder ähnliches, die wenigstens ein Vorratsfach (12) zur Aufnahme von Nahrungsmitteln einschließen, wobei die Desodorierungsvorrichtung eine Heizvorrichtung (21) aufweist, die in einer Luftumlaufbahn vorgesehen wird, über die Luft in dem Vorratsfach (12) zirkuliert, einen Deckel (22), der die Heizvorrichtung (21) von oben abdeckt, ein desodorierendes Element (25), das mit einem Haltemittel (26) so an der Unterseite des Deckels (22) angebracht wird, daß es zwischen der Heizvorrichtung (21) und dem Deckel (22) angeordnet ist, wobei das Halteelement (26) am Deckel (22) befestigt ist, wobei das desodorierende Element (25) mit der über die Luftumlaufbahn zirkulierenden Luft in Kontakt gebracht wird, um so Geruchskomponenten zu adsorbieren, die in der Luft enthalten sind, die über die Umlaufbahn geführt wird, und die adsorbierten Geruchskomponenten zu oxidieren, um diese beim Erhitzen durch die Heizvorrichtung (21) abzubauen, dadurch gekennzeichnet, daß der Deckel (22) auf seiner Unterseite eine Vielzahl von konvexen Abschnitten (24) hat und daß das desodorierende Element (25) von unten durch das Haltemittel (26) so gehalten wird, daß es mit den konvexen Abschnitten (24) in Berührung ist.

2. Desodorierungsvorrichtung nach Anspruch 1, dadurch gekennzeichnet, daß das Haltemittel (26) aus einem stark wärmeleitenden Material hergestellt wird.

3. Desodorierungsvorrichtung nach Anspruch 1 oder 2, dadurch gekennzeichnet, daß eine Vielzahl von desodorierenden Elementen (25) bereitgestellt wird und daß das Haltemittel (26) eine Vielzahl konkaver Abschnitte (27) hat, in denen jeweils die desodorierenden Elemente (25) gehalten werden.

4. Desodorierungsvorrichtung nach Anspruch 1, 2 oder 3, dadurch gekennzeichnet, daß das Haltemittel (26) ein Metalldrahtnetz aufweist und an den Deckel (22) geschweißt wird.

## Revendications

1. Dispositif de désodorisation pour un réfrigérateur ou similaire, englobant au moins un compartiment de stockage (12) pur conserver des aliments, le dispositif de désodorisation comprenant un dispositif de chauffage (21), agencé dans une voie de circulation d'air à travers laquelle circule l'air contenu dans le compartiment de stockage (12), un couvercle (22) recouvrant le dispositif de chauffage (21) d'en haut, un élément de désodorisation (25) étant fixé à un côté inférieur du couvercle (22) par l'intermédiaire d'un moyen de retenue (26), de sorte à être positionné entre le dispositif de chauffage (21) et le couvercle (22), le moyen de retenue (26) étant fixé au couvercle (22), l'élément de désodorisation (25) étant mis en contact avec l'air traversant la voie de circulation d'air pour adsorber ainsi les composantes d'odeur contenues dans l'air traversant la voie de circulation et oxyder les composantes d'odeur adsorbées en vue de leur décomposition lors du chauffage par le dispositif de chauffage (21), caractérisé en ce que le couvercle (22) comporte plusieurs parties convexes (24) au niveau d'un côté inférieur correspondant et en ce que l'élément de désodorisation (25) est retenu d'en bas par le moyen de retenue (26) de manière à s'engager dans les parties convexes (24).

2. Dispositif de désodorisation selon la revendication 1, caractérisé en ce que le moyen de retenue (26) est composé d'un matériau à conductivité thermique élevée.

3. Dispositif de désodorisation selon les revendications 1 ou 2, caractérisé en ce qu'il comporte plusieurs éléments de désodorisation (25) et en ce que le moyen de retenue (26) comporte plusieurs parties concaves (27) dans lesquelles sont contenus les éléments de désodorisation respectifs (25).

4. Dispositif de désodorisation selon les revendications 1, 2 ou 3, caractérisé en ce que le moyen de retenue (26) comprend un treillis métallique et en ce qu'il est soudé au couvercle (22).
